# EUROPEAN PATENT SPECIFICATION

(11) **EP 2 827 474 B1**
(45) Date of publication and mention of the grant of the patent: **03.07.2019**
(21) Application number: 14170684.6
(22) Date of filing: 30.05.2014
(51) Int. Cl.: H02K 1/27

(54) **Motor**
Motor
Moteur

(30) Priority: 17.07.2013 KR 20130084411; 17.07.2013 US 201361847253 P
(43) Date of publication of application: 21.01.2015
(73) Proprietor: Samsung Electronics Co., Ltd., Gyeonggi-do 16677 (KR)
(72) Inventor: Han, Jin Woo, Suwon-si Gyeonggi-do (KR); Kim, Deok Jin, Hwaseong-si Gyeonggi-do (KR); Kim, Young Kwan, Anyang-si Gyeonggi-do (KR); In, Byung Ryel, Suwon-si Gyeonggi-do (KR)
(74) Representative: Taor, Simon Edward William

(56) References cited:
- EP-A2- 2 568 578
- EP-A2- 2 568 579
- US-A1- 2006 028 083
- US-A1- 2006 061 228

## Description

Embodiments of the present disclosure relate to a motor having an improved structure to enhance durability.

In general, a motor is a machine acquiring rotary force from electric energy, and includes a stator and a rotor. The rotor is configured to electromagnetically interact with the stator and is rotated by force acting between a magnetic field and current flowing along coils.

Permanent magnet motors using permanent magnets to generate a magnetic field may be divided into a surface mounted permanent magnet motor, an interior type permanent magnet motor, and a spoke type permanent magnet motor.

Among them, the spoke type permanent magnet motor structurally has high magnetic flux concentration and thus may generate high torque and high output and be minimized at the same output. The spoke type permanent magnet motor may be applied as a washing machine driving motor, an electric vehicle driving motor, and a small-sized generator driving motor requiring high torque and high output.

US20060028083 discloses a rotor for a permanent magnet generator.

US20060061228 discloses a flux concentration type motor.

EP2568578 discloses a motor capable of reducing a magnetic flux leakage.

EP2568579 discloses a motor having an improved struction capable of achieving a reduction in magnetic flux leakage.

In general, a rotor of the spoke type permanent magnet motor includes permanent magnets disposed in a radial shape about a rotary shaft, cores provided to support the permanent magnets and to form paths of magnetic flux, and injection molded products disposed to cover the permanent magnets.

In such a spoke type permanent magnet motor, the injection molded products covering the permanent magnets may be separated from the cores or be damaged or broken due to centrifugal force generated during a process of rotating the rotor at high speed.

Therefore, it is an aspect of the present disclosure to provide a motor having an improved structure to enhance durability of a rotor.

Additional aspects of the disclosure will be set forth in part in the description which follows and, in part, will be apparent from the description, or may be learned by practice of the disclosure.

According to an aspect of the present invention, a motor is provided according to claim 1. Preferred features are set out in claims 2 to 12.

These and/or other aspects of the disclosure will become apparent and more readily appreciated from the following description of the embodiments, taken in conjunction with the accompanying drawings of which:
FIG. 1 is a cross-sectional view illustrating the configuration of a motor in accordance with one embodiment of the present disclosure;
FIG. 2 is a perspective view of a stator in the motor in accordance with the embodiment of the present disclosure;
FIG. 3 is a perspective view of a rotor in accordance with the embodiment of the present disclosure;
FIG. 4 is an exploded perspective view of the rotor in accordance with the embodiment of the present disclosure;
FIG. 5 is a view illustrating the motor in accordance with the embodiment of the present disclosure from which some parts of the stator and the rotor are omitted;
FIG. 6 is a partial enlarged view of the rotor in accordance with the embodiment of the present disclosure; and
FIGS. 7A to 7D are views illustrating other examples of a structure to fix a molded member in the rotor in accordance with the embodiment of the present disclosure.

Reference will now be made in detail to the embodiments of the present disclosure, examples of which are illustrated in the accompanying drawings, wherein like reference numerals refer to like elements throughout. Hereinafter, an axial direction X means a direction parallel with a motor shaft. A circumferential direction C and a radial direction R mean a direction of the circumference of a circle formed about the motor shaft and a direction of the radius of the circle.

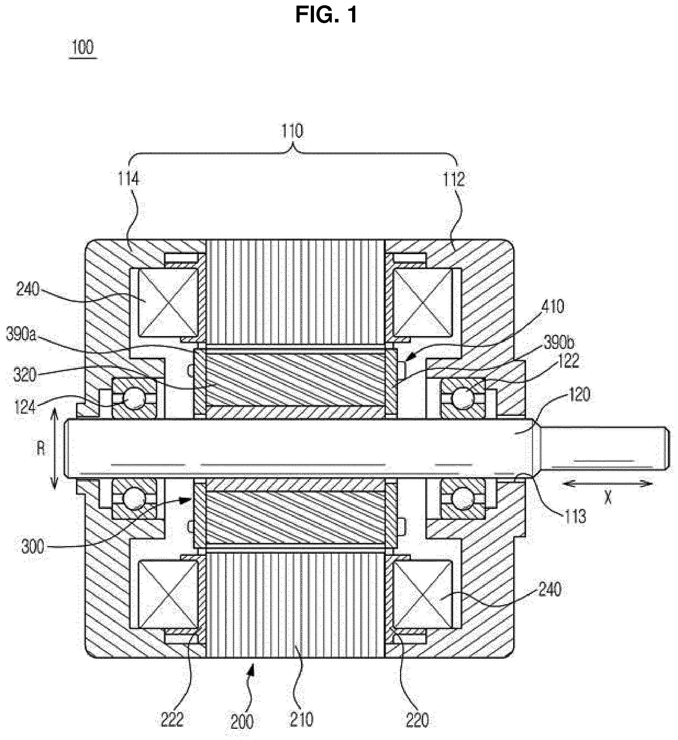

As exemplarily shown in FIG. 1, a motor 100 includes a motor housing 110 forming the external appearance of the motor 100. The motor housing 110 may include a first housing 112 and a second housing 114 separated from each other in the axial direction of the motor 100. The first housing 112 and the second housing 114 may be combined with a stator 200.

The stator 200 and a rotor 300 are disposed within the motor housing 110. The stator 200 may be fixed to the motor housing 110. The rotor 300 is configured so as to be rotated by electromagnetic interaction with the stator 200. The rotor 300 may be disposed within the stator 200.

A motor shaft 120 is inserted into the rotor 300 so as to be rotated together with the rotor 300. One side of the motor shaft 120 is rotatably supported by the first housing 112 through a bearing 122, and the other side of the motor shaft 120 is rotatably supported by the second housing 114 through a bearing 124. One end of the motor shaft 120 protrudes to the outside of the motor housing 110 through an opening 113 formed on the first housing 112.

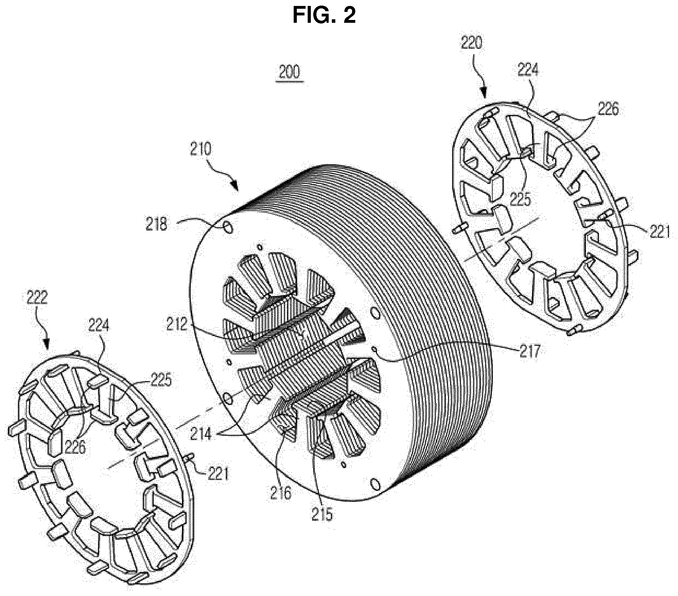

As exemplarily shown in FIGS. 1, 2, and 5, the stator 200 may include a stator body 210, a first insulator 220, a second insulator 222, and coils 240. In FIG. 2, the coils 240 are omitted.

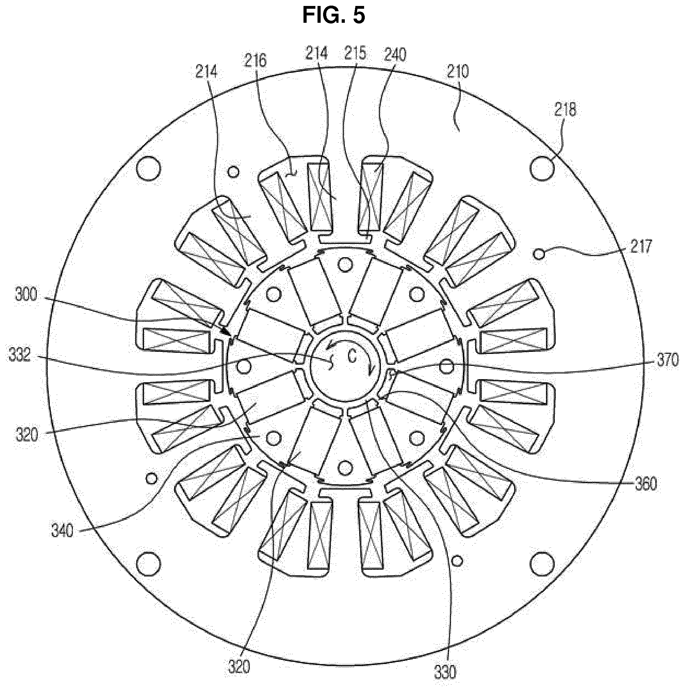

A space to receive the rotor 300, i.e., a rotor reception part 212, is formed at the center of the stator body 210. Stator cores 214 are arranged around the rotor reception part 212 in the circumferential direction (in the direction C, with reference to FIG. 5) of the rotor 300. The stator cores 214 extend from the rotor reception part 212 in the radial shape. The stator body 210 may be formed by stacking steel plates manufactured by pressing.

The stator cores 214 are disposed at intervals in the circumferential direction and thus, stator slots 216 are formed between the stator cores 214. Since the coils 240 are wound on the stator cores 214, the coils 240 are received in the stator slots 216. An expanding core part 215 having an expanding width is formed at the inner end of each of the stator cores 214 adjacent to the rotor 300. A gap for rotation of the rotor 300 is formed between the inner surface of the expanding core part 215 and the outer surface of the rotor 300.

The first insulator 220 and the second insulator 222 are formed of an electrically insulating material, and are disposed at both sides of the stator body 210 in the axial direction. The first insulator 220 and the second insulator 222 are combined with both sides of the stator body 210 so as to cover the stator cores 214. Combination protrusions 221 protruding toward the stator body 210 are formed on the first insulator 220 and the second insulator 222, and the combination protrusions 221 are inserted into combination holes 217 formed on the stator body 210.

Each of the first insulator 220 and the second insulator 222 includes a ring-shaped frame 224, coil support parts 225 corresponding to the stator cores 214, and coil guide parts 226 protruding from the inner and outer ends of the coil support parts 225 in the radial direction. The coil support parts 225 are separated from each other in the circumferential direction and thus, spaces corresponding to the stator slots 216 are formed between the coil support parts 225.

The coil 240 is wound on the stator core 214 and the coil support parts 225 of the first and second insulators 220 and 222 under the condition that the first insulator 220 and the second insulator 222 are combined with the stator body 210.

Insertion holes 218 passing through the stator body 210 in the axial direction may be formed on the stator body 210. Fastening members (not shown), such as pins, rivets, or bolts to combine the respective plates forming the stator body 210, are inserted into the insertion holes 218.

Housing through holes (not shown) are formed on the first housing 112 and the second housing 114 so as to correspond to the insertion holes 218 of the stator body 210 and thus, the first housing 112, the second housing 114, and the stator 200 may be fixed by the fastening members.

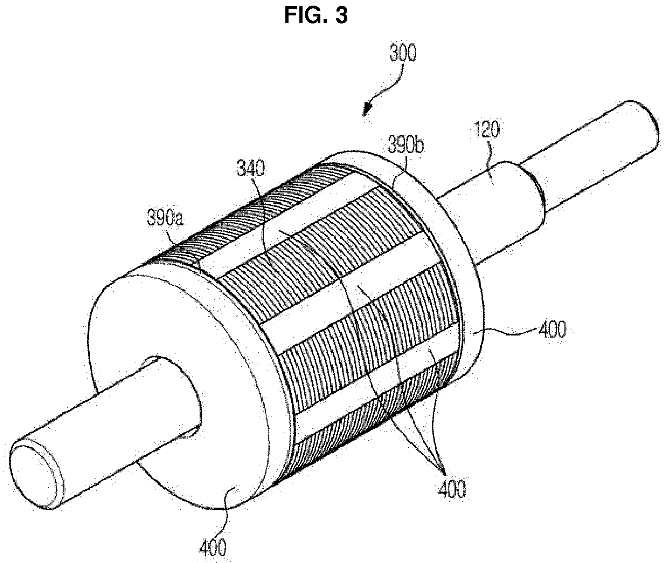

As exemplarily shown in FIGS. 3 to 6, the rotor 300 includes a rotor body 310 disposed in the rotor reception part 212 of the stator body 210, and permanent magnets 320 inserted into the rotor body 310. The rotor body 310 may be formed by stacking plate members manufactured by pressing a silicon steel sheet.

In order to increase structural stiffness of the rotor 300, a first cover plate 390a and a second cover plate 390b may be disposed at both sides of the rotor body 310 in the axial direction (in the direction X). A shaft reception hole 392 is formed at the center of each of the first cover plate 390a and the second cover plate 390b so as to receive the motor shaft 120.

The first and second cover plates 390a and 390b are disposed so as to cover the outer sides of the permanent magnets 320 in the axial direction and thus, prevent the permanent magnets 320 from being separated from the rotor 300 in the axial direction. Further, the first and second cover plates 390a and 390b may be used as structures to balance the rotor 300, if the rotor 300 is unbalanced. The first and second cover plates 390a and 390b may be formed of a non-magnetic material, for example, copper or stainless steel.

The outer sides of the first and second cover plates 390a and 390b in the axial direction may be covered with molded members 400. Structural strength of the rotor 300 may be further increased by the molded members 400. The molded members 400 may be integrated with the rotor body 310 by performing injection molding using plastic after the rotor body 310, with which the first and second cover plates 390a and 390b are combined, is inserted into a mold. The molded members 400 may cover the outer sides of the permanent magnets 320 in the radial direction of the rotor 300.

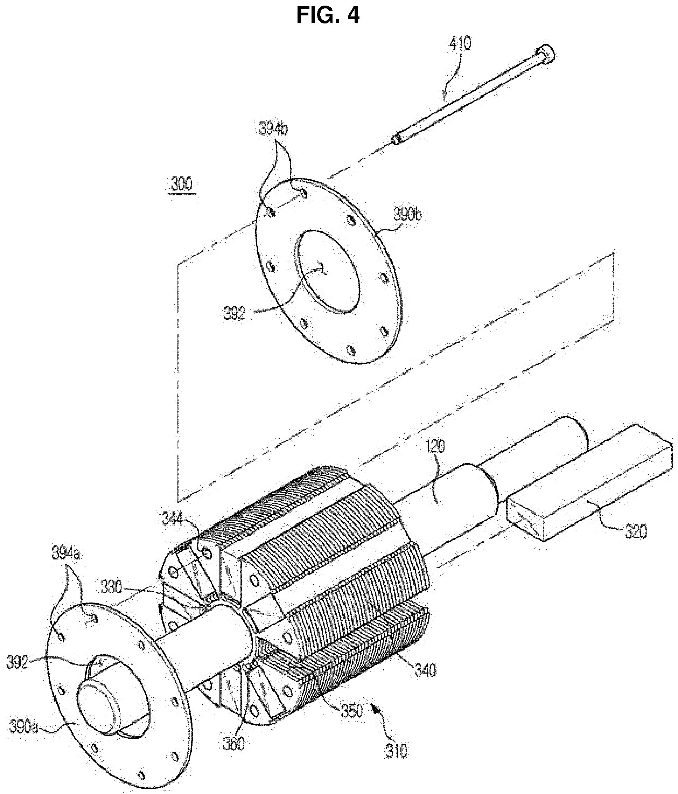

The permanent magnets 320 are arranged in the circumferential direction of the rotor 300 so as to be located in the radial shape around the motor shaft 120. Although FIG. 4 exemplarily illustrates 8 permanent magnets 320, the number of the permanent magnets 320 may be changed. The permanent magnets 320 may be ferrite magnets or magnets including a rare-earth element, such as neodymium or samarium.

The inner ends 321 of the permanent magnets 320 in the radial direction of the rotor 300 are disposed adjacent to the motor shaft 120, and the outer ends 322 of the permanent magnets 320 are disposed adjacent to the stator 200. The inner ends 321 and the outer ends 322 of the permanent magnets 320 include short sides 323 and 324 extending in the circumferential direction of the rotor 300. The short sides 323 and 324 of the rotor 300 are connected to long sides 325 and 326 extending in the radial direction of the rotor 300. The long sides 325 and 326 of the permanent magnets 320 have a longer length than the short sides 323 and 324 of the permanent magnets 320.

The N poles and the S poles of the permanent magnets 320 are arranged in the circumferential direction of the rotor 300. Among the permanent magnets 320, neighboring first permanent magnet 320a and second permanent magnet 320b are disposed such that the poles having the same polarity thereof are opposite. Through such a magnet circuit, magnetic flux generated from the permanent magnets 320 is concentrated and thus, performance of the motor may be improved while reducing the size of the motor.

The rotor body 310 includes a sleeve 330 forming a shaft hole 332 into which the motor shaft 120 is inserted, and rotor cores 340 connected to the sleeve 330. The sleeve 330 is formed in a ring shape, and includes an inner circumference 334 contacting the motor shaft 120 inserted into the shaft hole 332 and an outer circumference 336 opposite the permanent magnets 320 inserted into the rotor body 310.

A thickness t between the inner circumference 334 and the outer circumference 336 of the sleeve 330 may be 1.0mm to 3.0mm. If the thickness t is more than 3.0mm, magnetic flux leaking from the rotor cores 340 to the sleeve 330 is excessively increased and thus, performance of the motor is lowered, and if the thickness t is less than 1.0mm, a structural problem, such as deformation of the sleeve 330 when the motor shaft 120 is fitted into the shaft hole 332 by pressing, may occur.

The rotor cores 340 support the permanent magnets 320 and form paths of magnetic flux (i.e., magnetic paths) generated from the permanent magnets 320. The rotor cores 340 are arranged in the circumferential direction of the rotor 300 and are separated from each other so as to form rotor slots 350 to receive the permanent magnets 320.

The rotor cores 340 may be connected to the sleeve 330 through bridges 360. The bridges 360 corresponding to the rotor cores 340 thereof are arranged in the circumferential direction of the rotor 300. The bridges 360 may extend from the outer circumference 336 of the sleeve 330 outward in the radial direction and be connected to the inner ends of the corresponding rotor cores 340.

The width W1 of the bridges 360 may not exceed 1.0mm. The width W1 of the bridges 360 influences the amount of magnetic flux leaking to the sleeve 330 through the bridges 360. As the width W1 of the bridges 360 decreases, magnetic resistance increases and magnetic flux leakage may decrease.

However, since the bridges 360 serve to connect the rotor cores 340 to the sleeve 330, when the width W1 of the bridges 360 excessively decreases, the bridges 360 may be damaged or the rotor body 310 may be deformed during high-speed rotation of the rotor 300. Therefore, the width W1 of the bridges 360 may be not less than 0.4mm so as to maintain structural strength.

The permanent magnets 320 are respectively received in the rotor slots 350 restricted between two neighboring rotor cores 340. Since the permanent magnets 320 are separated from the sleeve 330, inner spaces 370 (with reference to FIG. 5) are formed between the permanent magnets 320 and the sleeve 330. Such inner spaces 370 may effectively suppress leakage of magnetic flux of the permanent magnets 320 toward the motor shaft 120 through the sleeve 330.

The inner spaces 370 between the permanent magnets 320 and the sleeve 330 may be filled with the molded members 400. Using the molded members 40 filling the inner spaces 370, movement of the permanent magnets 320 is prevented and structural strength and stability of the rotor 300 are improved.

The outer ends 322 of the permanent magnets 320 are located farther inward than the outer surfaces of the rotor cores 340 in the radial direction of the rotor 300. Outer support protrusions 340 protruding to two neighboring rotor slots 350 are provided at the outer ends of the rotor cores 340. Both edges of the outer ends 322 of the permanent magnets 320 are supported by the outer support protrusions 341 protruding from two neighboring rotor cores 340.

The thickness t1 of the outer support protrusions 341 in the radial direction of the rotor 300 may be 0.5mm to 2mm. If the thickness t1 of the outer support protrusions 341 is excessively small, i.e., is less than 0.5mm, the outer support protrusions 341 are deformed or broken by centrifugal force during high-speed rotation of the rotor 300 and thus, the permanent magnets 320 may be separated from the rotor slots 350. If the thickness t1 of the outer support protrusions 341 is excessively great, i.e., exceeds 2mm, the radius of the rotor 300 is unnecessarily increased and is thus disadvantageous in terms of miniaturization of the motor.

The rotor cores 340 include inner support protrusions 380 supporting the inner ends 321 of the permanent magnets 320 so that the permanent magnets 320 are separated from the sleeve 330. The inner support protrusions 380 protrude from the inner ends of the rotor cores 340 toward two neighboring rotor slots 350. The sleeve 330, the rotor cores 340, the bridges 360, the outer support protrusions 341, and the inner support protrusions 380 may be integrally formed of the same material and thus form the rotor body 310.

The thickness t2 of the inner support protrusions 380 in the radial direction of the rotor 300 may be 0.5mm to 2mm. If the thickness t2 of the inner support protrusions 380 is excessively small, i.e., is less than 0.5mm, structural strength of the inner support protrusions 380 decreases and thus, the inner support protrusions 380 may not stably support the permanent magnets 320. If the thickness t2 of the inner support protrusions 380 is excessively great, i.e., exceeds 2mm, the inner support protrusions 380 may have a negative influence on magnetization of the permanent magnets 320. The permanent magnets 320 are magnetized after a non-magnetized material is inserted into the rotor slots 350. Here, if the thickness t2 of the inner support protrusions 380 contacting the permanent magnets 320 is great, a magnetic field for magnetization of the permanent magnets 320 leaks by the inner support protrusions 380 and magnetization of the permanent magnet 320 at parts supported by the inner support protrusions 380 may be incompletely carried out.

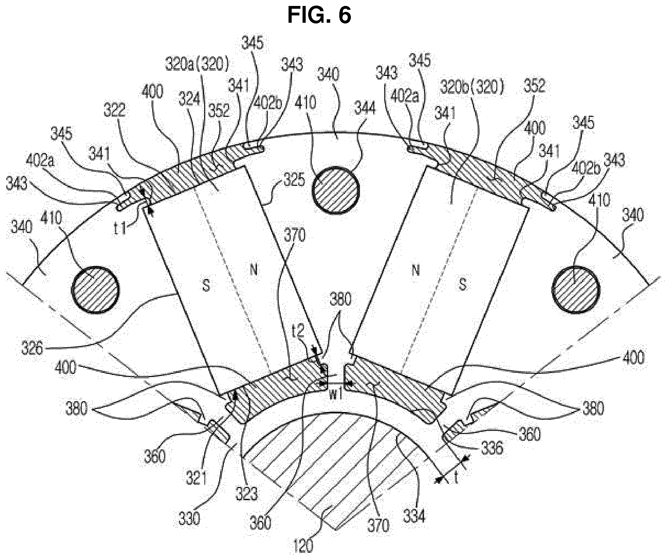

A molded member reception part 352 is defined by two neighboring rotor cores 340 in the circumferential direction of the rotor 300 and the outer end 322 of the permanent magnet 322 disposed between the two rotor cores 340. As exemplarily shown in FIGS. 3 and 6, the molded member reception part 352 may be filled with the molded member 400. The molded member 400 filling the molded member reception part 352 and the outer support protrusions 341 support the outer end 322 of the permanent magnet 320 and thus increase structural strength of the rotor 300. Therefore, deformation of the outer support protrusions 341 and separation of the permanent magnets 320 from the rotor slots 350 by centrifugal force during high-speed rotation of the rotor 300 may be prevented.

The rotor cores 340 include fixing protrusions 345 protruding toward the molded member reception parts 352 so as to form reception holes 343 between the fixing protrusions 345 and the outer support protrusions 341. A part of the molded a member 400 received in the molded member reception part 352 fills the reception hole 343, and the molded member 400 in the reception hole 343 is supported by the fixing protrusion 345 disposed at the outside of the reception hole 343. Therefore, separation of the molded members 400 from the molded member reception parts 352 by centrifugal force when the rotor 300 is rotated at high speed may be prevented. The fixing protrusions 345 may be separated from the outer support protrusions 341 in the radial direction of the rotor 300.

The molded member 400 includes reception protrusions 402a and 402b received in the reception holes 343. The reception protrusions 402a and 402b extend in the circumferential direction of the rotor 300 or in the opposite direction and are formed in a shape corresponding to the reception holes 343.

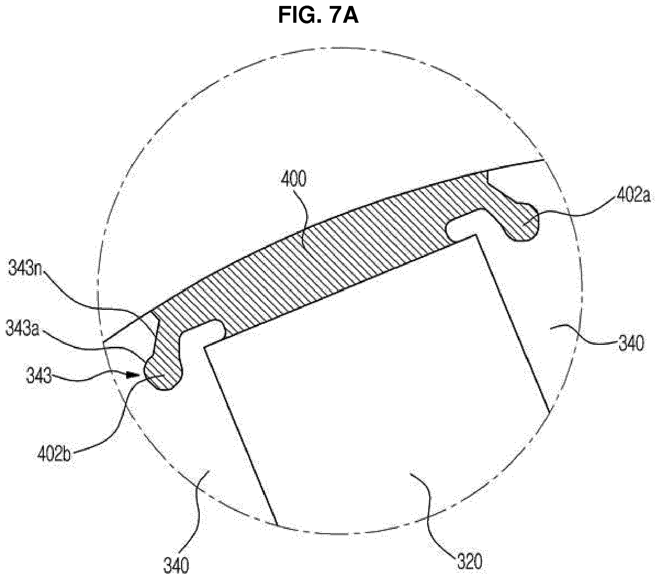

As exemplarily shown in FIGS. 7A to 7D, the shape of the reception holes 343 may be variously modified. The reception hole 343 may include a connection part 343n communicating with the molded member reception part 352 and an expansion part 343a, 343b, 343c, or 343d expanding to receive a greater amount of the molded member 400 than the connecting part 343n.

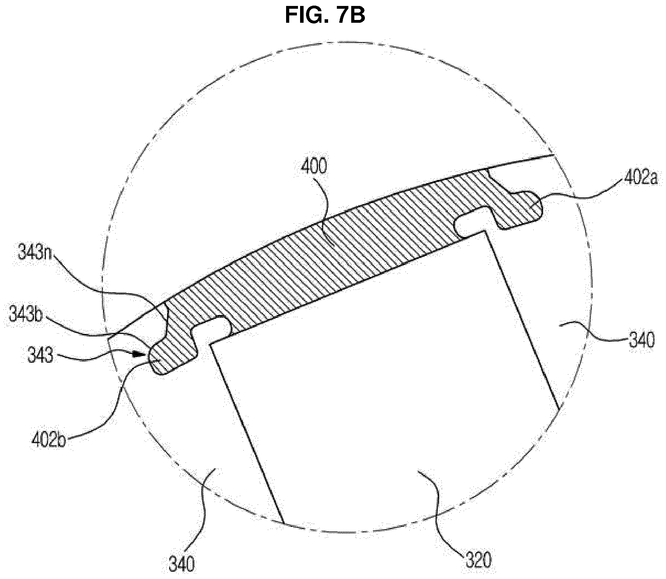

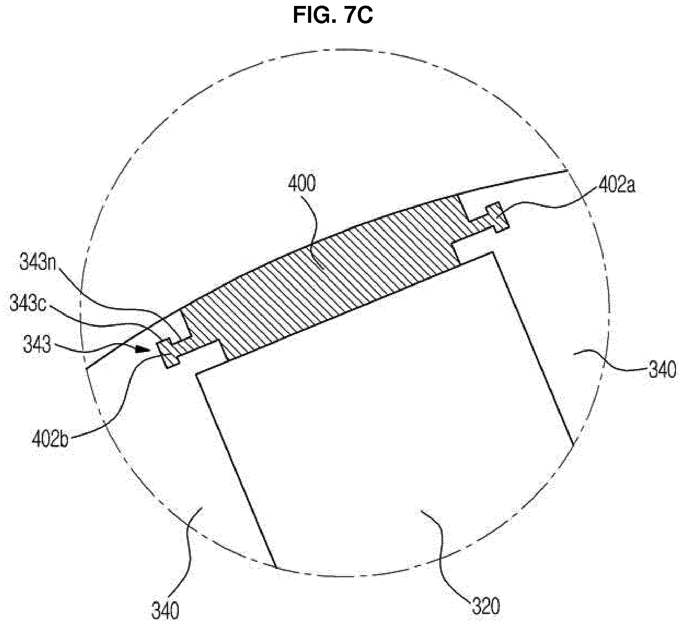

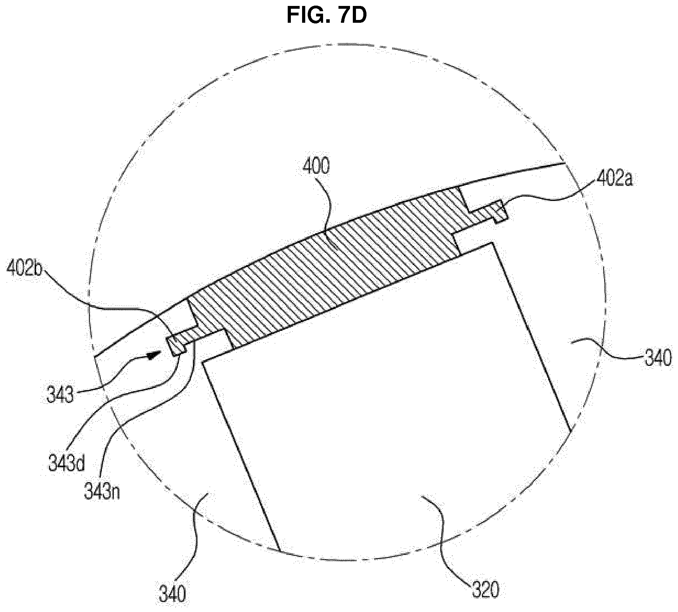

The connection part 343n may be inclined in a direction between the circumferential direction of the rotor 300 and the radial direction of the rotor 300, as exemplarily shown in FIGS. 7A and 7B. Otherwise, the connection part 343n may be formed in the circumferential direction of the rotor 300, as exemplarily shown in FIGS. 7C and 7D.

The expansion part 343c may expand toward both sides in the radial direction of the rotor 300, as exemplarily shown in FIG. 7C, or the expansion part 343d may expand toward one side in the radial direction of the rotor 300, as exemplarily shown in FIG. 7D. The cross-sectional shape of the expansion parts 343a, 343b, 343c, or 343d may be a circle, as exemplarily shown in FIG. 7A, or be a rectangle, as exemplarily shown in FIGS. 7B to 7D. Although not shown in the drawings, the expansion parts 343a, 343b, 343c, or 343d may be formed in various shapes, such as a semicircle, a triangle, etc. in addition to a circle and a rectangle.

The rotor body 310 and the first and second cover plates 390a and 390b may be combined by fastening members 410. The rotor body 310 includes through holes 344 passing through the rotor cores 340 in the axial direction. The through holes 344 may be provided on at least one of the rotor cores 340. FIGS. 1 to 6 exemplarily illustrate the through holes 344 corresponding to the respective rotor cores 340. First plate holes 394a and second plate holes 394b corresponding to the through holes 344 formed on the rotor cores 340 may be formed on the first and second cover plates 390a and 390b.

Structural strength of the rotor 300 may be increased by disposing the first and second cover plates 390a and 390b at both sides of the rotor body 310 and integrating the first and second cover plates 390a and 390b with the rotor body 310 by inserting the fastening members 410 into the second plate holes 394b, the through holes 344, and the first plate holes 394a.

The above-described motor 100 may be applied not only to a washing machine, a clothes dryer, an air conditioner, a refrigerator and a compressor, but also to an electric vehicle requiring a small-sized high power motor.

In some embodiments, the outer ends of the plurality of permanent magnets are located farther inward than outer surfaces of the plurality of rotor cores in the radial direction; and the rotor further includes molded member reception parts, each of which is defined by two neighboring rotor cores in the circumferential direction of the rotor and the outer end of the permanent magnet disposed between the two rotor cores.

In some embodiments, each of the plurality of reception holes includes: a connection part communicating with each of the molded member reception parts; and an expansion part whose size increases to receive a greater amount of the molding member than the connection part.

In some embodiments, the size of the expansion part increases in two directions parallel to the radial direction of the rotor.

In some embodiments, the size of the expansion part increases in one direction parallel to the radial direction of the rotor.

In some embodiments, the connection part is formed in the circumferential direction of the rotor.

In some embodiments, the connection part is formed in a direction between the circumferential direction of the rotor and the radial direction of the rotor.

In some embodiments, the motor further comprises a plurality of inner support protrusions, each inner support protrusion protruding from a said rotor core so as to support the inner end of a said permanent magnet.

In some embodiments, each of the molding members includes at least one reception protrusion received in a said reception hole.

In some embodiments, the at least one reception protrusion extends in the circumferential direction of the rotor.

In some embodiments, the at least one reception protrusion extends in a direction between the circumferential direction of the rotor and the radial direction of the rotor.

In some embodiments, one end of the at least one reception protrusion increases in size.

As is apparent from the above description, in a motor in accordance with one embodiment of the present disclosure, molding members covering permanent magnets are firmly fixed to rotor cores and thus, separation of the molding members from a rotor or breakage of the molding members during high-speed rotation of the rotor may be prevented.

Although a few embodiments of the present disclosure have been shown and described, it would be appreciated by those skilled in the art that changes may be made in these embodiments without departing from the principles of the invention, the scope of which is defined in the claims.

## Claims

1. A motor comprising:
a stator (200) including stator cores and coils wound on the stator cores;
a rotor (300) disposed at the inside of the stator and arranged to be rotated by electromagnetic interaction with the stator; and
a motor shaft (120) combined with the rotor so as to be rotated together with the rotor, wherein the rotor includes:
a plurality of rotor cores (340) arranged to be separated from each other in the circumferential direction of the rotor;
a plurality of rotor slots (350) formed between the plurality of rotor cores;
a plurality of permanent magnets (320) inserted into the plurality of rotor slots, each of the plurality of permanent magnets (320) including an inner end (323), an outer end (324), a left side (326) and a right side (325);
molded members (400) arranged to cover the outer ends of the plurality of permanent magnets; **characterized in that** the motor further comprises:
a plurality of reception holes (343) provided on the plurality of rotor cores, wherein the reception holes are filled with the molded members and each of the reception holes (343) extending circumferentially into the rotor cores past a plane of the left and right sides of the plurality of permanent magnets (320), respectively; and
a plurality of fixing protrusions (345), each fixing protrusion disposed at an outside of a said reception hole in a radial direction of the rotor so as to prevent separation of the molded members from the rotor by centrifugal force during rotation of the rotor;
further comprising a plurality of outer support protrusions (341) protruding from the plurality of rotor cores, each outer support protrusion supporting an outer end of a said permanent magnet, and wherein each fixing protrusion is separated from a said outer support protrusion, and a said reception hole is interposed between said fixing protrusion and said outer support protrusion.

2. The motor according to claim 1, wherein:
the outer ends of the plurality of permanent magnets are located farther inward than outer surfaces of the plurality of rotor cores in the radial direction; and
the rotor further includes molded member reception parts (353), each of which is defined by two neighboring rotor cores in the circumferential direction of the rotor and the outer end of the permanent magnet disposed between the two rotor cores.

3. The motor according to claim 2, wherein each of the plurality of reception holes includes:
a connection part (343n) communicating with a said molded member reception part; and
an expansion part (343a) whose size increases to receive a greater amount of the molded member than the connection part.

4. The motor according to claim 3, wherein the size of the expansion part increases in two directions parallel to the radial direction of the rotor.

5. The motor according to claim 3, wherein the size of the expansion part increases in one direction parallel to the radial direction of the rotor.

6. The motor according to any one of claims 3 to 5, wherein the connection part is formed in the circumferential direction of the rotor.

7. The motor according to any one of claims 3 to 5, wherein the connection part is formed in a direction between the circumferential direction of the rotor and the radial direction of the rotor.

8. The motor according to any one of claims 1 to 7, further comprising a plurality of inner support protrusions, each inner support protrusion protruding from a said rotor core so as to support the inner end of a said permanent magnet.

9. The motor according to any one of claims 1 to 8, wherein each of the molded members includes at least one reception protrusion received in a said reception hole.

10. The motor according to claim 9, wherein the at least one reception protrusion extends in the circumferential direction of the rotor.

11. The motor according to claim 9, wherein the at least one reception protrusion extends in a direction between the circumferential direction of the rotor and the radial direction of the rotor.

12. The motor according to any one of claims 9 to 11, wherein one end of the at least one reception protrusion increases in size.

## Patentansprüche

1. Motor, der Folgendes aufweist:
einen Stator (200) mit Statorkernen und auf die Statorkerne aufgewickelten Wicklungen;
einen Rotor (300), der an der Innenseite des Stators liegt und so angeordnet ist, dass er durch elektromagnetische Wechselwirkung mit dem Stator gedreht wird; und
eine Motorwelle (120), die mit dem Rotor kombiniert ist, um zusammen mit dem Rotor gedreht zu werden, wobei der Rotor Folgendes enthält:
mehrere Rotorkerne (340), die so angeordnet sind, dass sie in der Umfangsrichtung des Rotors voneinander getrennt sind;
mehrere Rotorzwischenräume (350), die zwischen den mehreren Rotorkernen gebildet sind;
mehrere Dauermagnete (320), die in die mehreren Rotorzwischenräume eingesetzt sind, wobei die mehreren Dauermagnete (320) jeweils ein inneres Ende (323), ein äußeres Ende (324), eine linke Seite (326) und eine rechte Seite (325) haben;
Formteile (400), die zum Abdecken der äußeren Enden der mehreren Dauermagnete angeordnet sind; **dadurch gekennzeichnet, dass** der Motor ferner Folgendes aufweist:
mehrere Aufnahmelöcher (343), die an den mehreren Rotorkernen bereitgestellt sind, wobei die Aufnahmelöcher mit den Formteilen gefüllt sind und wobei die Aufnahmelöcher (343) sich jeweils in Umfangsrichtung über eine Ebene der linken bzw. der rechten Seite der mehreren Dauermagnete (320) hinaus in die Rotorkerne erstrecken; und
mehrere Fixiervorsprünge (345), wobei die Fixiervorsprünge jeweils an einer Außenseite eines genannten Aufnahmelochs in einer radialen Richtung des Rotors liegen, um die Trennung der Formteile von dem Rotor durch Fliehkraft während der Drehung des Rotors zu verhindern;
wobei er ferner mehrere äußere Stützvorsprünge (341) aufweist, die von den mehreren Rotorkernen vorstehen, wobei die äußeren Stützvorsprünge jeweils ein äußeres Ende eines genannten Dauermagneten stützen und wobei die Fixiervorsprünge jeweils von einem genannten äußeren Stützvorsprung getrennt sind und sich zwischen dem genannten Fixiervorsprung und dem genannten äußeren Stützvorsprung ein genanntes Aufnahmeloch befindet.

2. Motor nach Anspruch 1, wobei:
die äußeren Enden der mehreren Dauermagnete sich weiter einwärts befinden als Außenflächen der mehreren Rotorkerne in der radialen Richtung; und
der Rotor ferner Formteilaufnahmeteile (353) hat, die jeweils von zwei benachbarten Rotorkernen in der Umfangsrichtung des Rotors und dem äußeren Ende des zwischen den zwei Rotorkernen liegenden Dauermagneten definiert werden.

3. Motor nach Anspruch 2, wobei jedes der mehreren Aufnahmelöcher Folgendes hat:
einen Verbindungsteil (343n), der mit einem genannten Formteilaufnahmeteil in Verbindung steht; und
einen Ausdehnungsteil (343a), dessen Größe zunimmt, um ein größeres Stück des Formteils aufzunehmen als der Verbindungsteil.

4. Motor nach Anspruch 3, wobei die Größe des Ausdehnungsteils in zwei Richtungen parallel zur radialen Richtung des Rotors zunimmt.

5. Motor nach Anspruch 3, wobei die Größe des Ausdehnungsteils in einer Richtung parallel zur radialen Richtung des Rotors zunimmt.

6. Motor nach einem der Ansprüche 3 bis 5, wobei der Verbindungsteil in der Umfangsrichtung des Rotors ausgebildet ist.

7. Motor nach einem der Ansprüche 3 bis 5, wobei der Verbindungsteil in einer Richtung zwischen der Umfangsrichtung des Rotors und der radialen Richtung des Rotors ausgebildet ist.

8. Motor nach einem der Ansprüche 1 bis 7, der ferner mehrere innere Stützvorsprünge aufweist, wobei jeder innere Stützvorsprung von einem genannten Rotorkern vorsteht, um das innere Ende eines genannten Dauermagneten zu stützen.

9. Motor nach einem der Ansprüche 1 bis 8, wobei jedes der Formteile wenigstens einen in einem genannten Aufnahmeloch aufgenommenen Aufnahmevorsprung hat.

10. Motor nach Anspruch 9, wobei der wenigstens eine Aufnahmevorsprung sich in der Umfangsrichtung des Rotors erstreckt.

11. Motor nach Anspruch 9, wobei der wenigstens eine Aufnahmevorsprung sich in einer Richtung zwischen der Umfangsrichtung des Rotors und der radialen Richtung des Rotors erstreckt.

12. Motor nach einem der Ansprüche 9 bis 11, wobei ein Ende des wenigstens einen Aufnahmevorsprungs größer wird.

## Revendications

1. Moteur comprenant :
un stator (200) incluant des noyaux de stator et des bobines enroulées sur les noyaux de stator ;
un rotor (300) disposé au niveau de la face intérieure du stator et agencé pour être soumis à rotation par une interaction électromagnétique avec le stator ; et
un arbre de moteur (120) combiné avec le rotor de sorte à être soumis à rotation avec le rotor, le rotor incluant :
une pluralité de noyaux de rotor (340) agencés pour être séparés les uns des autres dans le sens circonférentiel du rotor ;
une pluralité de fentes de rotor (350) formées entre la pluralité de noyaux de rotor ;
une pluralité d'aimants permanents (320) insérés dans la pluralité de fentes de rotor, chaque aimant parmi la pluralité d'aimants permanents (320) incluant une extrémité interne (323), une extrémité externe (324), un côté gauche (326) et un côté droit (325) ;
des éléments moulés (400) agencés pour couvrir les extrémités externes de la pluralité d'aimants permanents ; **caractérisé en ce que** le moteur comprend en outre :
une pluralité de trous de réception (343) prévus sur la pluralité de noyaux de rotor, les trous de réception étant remplis avec les éléments moulés et chacun des trous de réception (343) s'étendant de manière circonférentielle jusque dans les noyaux de rotor en passant devant un plan des côtés gauche et droit de la pluralité d'aimants permanents (320), respectivement ; et
une pluralité de saillies de fixation (345), chaque saillie de fixation étant disposée au niveau d'une face extérieure dudit un trou de réception dans un sens radial du rotor de sorte à empêcher la séparation des éléments moulés par rapport au rotor par une force centrifuge durant la rotation du rotor ;
comprenant en outre une pluralité de saillies de support externes (341) faisant saillie à partir de la pluralité de noyaux de rotor, chaque saillie de support externe soutenant une extrémité externe dudit un aimant permanent, et chaque saillie de fixation étant séparée par rapport à ladite une saillie de support externe, et ledit un trou de réception étant interposé entre ladite saillie de fixation et ladite saillie de support externe.

2. Moteur selon la revendication 1, dans lequel :
les extrémités externes de la pluralité d'aimants permanents sont localisées plus loin vers l'intérieur que les surfaces externes de la pluralité de noyaux de rotor dans le sens radial ; et
le rotor inclut en outre des pièces de réception d'éléments moulés (353), dont chacune est définie par deux noyaux de rotor avoisinants dans le sens circonférentiel du rotor et l'extrémité externe de l'aimant permanent disposée entre les deux noyaux de rotor.

3. Moteur selon la revendication 2, dans lequel chaque trou parmi la pluralité de trous de réception inclut :
une pièce de raccordement (343n) en communication avec ladite une pièce de réception de l'élément moulé ; et
une pièce d'expansion (343a) dont la taille augmente pour recevoir une quantité plus grande de l'élément moulé que la pièce de raccordement.

4. Moteur selon la revendication 3, dans lequel la taille de la pièce d'expansion augmente dans deux sens parallèles au sens radial du rotor.

5. Moteur selon la revendication 3, dans lequel la taille de la pièce d'expansion augmente dans un sens parallèle au sens radial du rotor.

6. Moteur selon l'une quelconque des revendications 3 à 5, dans lequel la pièce de raccordement est formée dans le sens circonférentiel du rotor.

7. Moteur selon l'une quelconque des revendications 3 à 5, dans lequel la pièce de raccordement est formée dans un sens entre le sens circonférentiel du rotor et le sens radial du rotor.

8. Moteur selon l'une quelconque des revendications 1 à 7, comprenant en outre une pluralité de saillies de support internes, chaque saillie de support interne faisant saillie à partir dudit un noyau de rotor de sorte à soutenir l'extrémité interne dudit un aimant permanent.

9. Moteur selon l'une quelconque des revendications 1 à 8, dans lequel chacun des éléments moulés inclut au moins une saillie de réception reçue dans ledit un trou de réception.

10. Moteur selon la revendication 9, dans lequel l'au moins une saillie de réception s'étend dans le sens circonférentiel du rotor.

11. Moteur selon la revendication 9, dans lequel l'au moins une saillie de réception s'étend dans un sens entre le sens circonférentiel du rotor et le sens radial du rotor.

12. Moteur selon l'une quelconque des revendications 9 à 11, dans lequel une extrémité de l'au moins une saillie de réception augmente en taille.
